# EUROPÄISCHE PATENTSCHRIFT

(11) **EP 3 584 500 B1**
(45) Veröffentlichungstag und Bekanntmachung des Hinweises auf die Patenterteilung: **03.11.2021**
(21) Anmeldenummer: 19180426.9
(22) Anmeldetag: 17.06.2019
(51) Int. Cl.: F23J 13/04, F16L 21/00, F16L 23/04, F16L 23/06

(54) **ROHRBRIDE FÜR VERBRENNUNGSLUFTROHRE SOWIE ABGASSYSTEM**
PIPE CLAMP FOR COMBUSTION FLUES AND FLUE GAS PIPE SYSTEM
BRIDE TUBULAIRE POUR TUYAUX D'AIR DE COMBUSTION AINSI QUE SYSTÈME DE GAZ D'ÉCHAPPEMENT

(30) Priorität: 20.06.2018 DE 102018114837
(43) Veröffentlichungstag der Anmeldung: 25.12.2019
(73) Patentinhaber: Bächle, Dieter, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- EP-A1- 2 865 944
- DE-A1- 2 927 898
- US-A- 3 266 109
- US-A- 4 483 556
- US-B1- 6 898 825

## Beschreibung

Die vorliegende Erfindung betrifft eine Rohrbride gemäß dem Oberbegriff des Anspruchs 1 zum Umgreifen einer umlaufenden Stoßstelle zwischen zwei axial benachbarten Verbrennungsluftrohren eines Abgasrohrsystems einer Heizungsanlage. Bevorzugt handelt es sich bei der Rohrbride um ein Kunststoffteil, insbesondere um ein Kunststoffspritzgussteil. Ferner betrifft die Erfindung ein Abgasrohrsystem mit einer derartigen Rohrbride gemäß dem Anspruch 8.

Rohrbriden zum aneinander Fixieren von Verbrennungsluftrohren in Heizungs-Abgasrohrsystem sind bekannt. Derartige Abgasrohrsysteme umfassen in der Regel zentrisch geführte Abgasrohre aus Kunststoff, die koaxial umgeben sind von ebenfalls aus Kunststoff ausgebildeten Verbrennungsluftrohren, durch welche dem Heizungsbrenner im Gegenstrom zu dem Abgas in den Abgasrohren Verbrennungsluft zugeführt wird.

Bei den Abgasrohren handelt es sich um Muffenrohre, die über eine in der jeweiligen Muffe vorgesehene Ringdichtung gasdicht gegenüber den Verbrennungsluftrohren verschlossen bzw. miteinander verbunden sind. Die Verbrennungsluftrohre werden im Gegensatz zu den Abgasrohren in der Regel auf Stoß angeordnet und mechanisch miteinander mittels eines Zentrierrings fixiert, welcher radial innen von den Abgasrohren durchsetzt wird und welcher in mantelseitigen Öffnungen der Verbrennungsluftrohre zu deren axialen Sicherung rastend eingreifen.

Zur weiteren mechanischen Fixierung bzw. Stabilisierung der Verbrennungsrohre werden die Stoßstellen von benachbarten Verbrennungsluftrohren umschlossen von sog. Rohrbriden, die im Wesentlichen aus einem geschlitzten Anlagering bestehen, der in geeigneter Weise um die Verbrennungsluftrohre verspannt wird. Eine entsprechende Rohrbride, welche mittels einer Spannschnalle um die Verbrennungsluftrohre im Bereich der Stoßstelle verspannt wird, ist aus der auf die Anmelderin zurückgehende DE 10 2012 102 545 A1 bekannt.

Da in vielen Ländern die Gesetze und Vorschriften bzgl. Abgasanlagen von Heizungen verschärft wurden oder ggf. verschärft werden, ist es wünschenswert auch für die Verbrennungsluftrohre strengere Anforderungen an die Dichtheit von deren Verbindung erfüllen zu können. Demnach besteht grundsätzlich der Bedarf an einfachen, kostengünstigen sowie leicht zu montierenden Rohrbriden, die einerseits bei einer Montage mit oder an entsprechenden Verbrennungsluftrohren eine optimale Dichtheit gewährleistet und andererseits einfach hergestellt sowie einfach montiert werden können.

Eine die Dichtheit der Stoßstelle verbessernde Rohrbride ist aus der Druckschrift DE 10 2013 111 653 A1 bekannt. Diese umfasst Fixiermittel in Form von Radialfortsätzen im Bereich eines ersten und eines zweiten freien Endbereichs der Rohrbride und/oder des Anlagerings der Rohrbride, welche über mindestens eine Schraube in Umfangsrichtung aneinander fixierbar sind. Dadurch kann zwar eine gewünscht hohe Dichtheit der Stoßstelle der Verbrennungsluftrohre erreicht werden, es ist jedoch, beispielsweise durch das Einschrauben einer oder mehrerer Schrauben ein verhältnismäßig komplexer Montagevorgang durchzuführen. Außerdem besteht die Gefahr, dass die Rohrbride beschädigt und damit die Dichtheit gefährdet werden könnte, falls die an den Radialfortsätzen vorgesehenen Schrauben zur Verspannung des Anlagerings der Dichtbride mit zu großer Kraft angezogen werden. Hinsichtlich der Fixiermittel der DE 10 2012 102 545 A1 hat sich die verhältnismäßig komplexe Form des Spannelements als nachteilig erwiesen. Dies führt einerseits zu einer komplexen oder komplizierten Herstellung der Dichtbride. Außerdem erlaubt das Spannelement die Fixierung oder Verspannung der Rohrbride in lediglich einer Endposition oder Montageposition, in der das Spannelement vollständig gespannt ist.

Die EP 2 865 944 A1 beschreibt eine Rohrbride zum Umgreifen einer umlaufenden Stoßstelle zwischen zwei axial benachbarten Verbrennungsluftrohren mit einem Anlagering zur Anlage an Mantelflächen beider Verbrennungsluftrohre, welcher mit Fixiermitteln um die Verbrennungsluftrohre verspannbar ist, wobei der Anlagering zum Öffnen des Anlagerings einen ersten sowie einen zweiten freien Endbereich aufweist, und wobei im montierten Zustand ein endseitiger Überlappungsabschnitt des ersten Endbereichs eine endseitige Zunge des zweiten Endbereichs radial außen in Umfangsrichtung überlappt. Erfindungsgemäß ist vorgesehen, dass der Überlappungsabschnitt im montierten Zustand die Zunge in beide Axialrichtungen übergreift sowie zu beiden Axialseiten der Zunge jeweils eine Anlagefläche aufweist.

Die US 6,898,825 B1 offenbart eine Schlauchklemme mit überlappenden Enden, wobei das äußere überlappende Ende einen gezahnten Abschnitt an seiner Außenfläche aufweist und das überlappende Ende des inneren überlappenden Endes eine Verriegelungsanordnung aufweist, die ein schwenkbares Verriegelungselement mit gezahnten Vorsprüngen aufweist, die mit dem gezahnten Abschnitt auf dem äußeren Ende zusammenwirken und das äußere Ende hat einen greifbaren Vorsprung zum Festziehen der Klemme.

Die US 4,483,556 A lehrt zudem eine Schlauchkonstruktion, wobei die Schlauchkonstruktion einen Schlauch umfasst, der hauptsächlich aus Polymermaterial besteht und einen Verstärkungsdraht aufweist, und eine äußere Schlauchklemmstruktur, die mit dem Schlauch verbunden ist und zwei Enden aufweist, die sobald sie miteinander verbunden sind angepasst werden, um den Schlauch an einem im Schlauch teleskopierten Element zu befestigen, indem ein im Wesentlichen ringförmiger Abschnitt des Schlauchs um das Element herum fest in Eingriff gebracht wird. Die Schlauchklemmstruktur weist eine Nut auf, die einen Teil des Verstärkungsdrahtes darin aufnimmt. Befestigungselemente befestigen den aufgenommenen Teil des Verstärkungsdrahtes an der Schlauchklemmstruktur, wobei die Befestigungselemente die Schlauchklemmstruktur mit dem Schlauch verbinden.

Die US 3,266,109 A beschreibt eine Klemme mit einem elastischen Band, dessen eines Ende mit einer Vielzahl von Zähnen ausgebildet ist, die sich auf seiner Außenfläche erstrecken, und dessen anderes Ende mit nur einem nach innen gerichteten Zahn ausgebildet ist, wobei das andere Ende so angeordnet ist, dass es das eine Ende überlappt, und die Zähne so ausgebildet sind, dass sie ineinandergreifen, wobei eine parallel zur Längsachse der Klemme verlaufende Nut in der Zahnreihe ausgebildet ist, die sich auf der Außenfläche der Klemme befindet, und wobei eine neben dem nach innen gerichteten Zahn angeordnete Feder so angeordnet ist, dass sie in die Nut eingreift.

Die DE 29 27 898 A1 beschreibt eine Schelle aus Kunststoff zum Einspannen zylindrischer Elemente, bei der zum Schließen der Schelle zwei Enden der Schelle durch Zusammenziehen radialer Vorsprünge an den Schellenenden in Eingriff bringbar sind und das erste Schellenende eine bündig mit ihrer radial inneren Seite an die radial innere Seite der Schelle anschließende Brücke aufweist, die den Spalt zwischen den Enden bei geschlossener Schelle auf der radial inneren Seite der Schelle überbrückt, wobei das zweite Schellenende eine radial nach innen und in Umfangsrichtung offene Ausnehmung aufweist, in die die Brücke bündig mit der radial inneren Seite des zweiten Endes und seitlich anliegend einführbar ist, und wobei die radialen Vorsprünge in eine ovale Öffnung auf der Unterseite eines Spannelements eingreifen, das einen Drehgriff aufweist.

Dementsprechend liegt ausgehend von dem vorgenannten Stand der Technik die Aufgabe der nachfolgend beschriebenen Erfindung darin, eine verbesserte Rohrbride zum Umschließen von Stoßstellen zweier benachbarter Verbrennungsluftrohre in Heizungsabgasrohrsystemen anzugeben, die einerseits eine optimierte Dichtheit der Verbrennungsluftrohrverbindung gewährleisten, gleichzeitig jedoch besonders einfach hergestellt und zudem besonders einfach an der entsprechenden Stoßstelle montiert werden können. Dabei ist die Aufgabe einer einfachen und auch sicheren Montage gleichermaßen als Grundvoraussetzung für die Erzeugung und Aufrechterhaltung einer hohen Dichtheit zu verstehen. Weiterhin besteht die Aufgabe darin, ein entsprechend verbessertes Abgasrohrsystem, insbesondere aus Kunststoff, für Heizungsanlagen anzugeben, dass sich durch eine verbesserte Dichtheit sowie durch eine erleichterte Montage auszeichnet.

Diese Aufgabe wird hinsichtlich der Rohrbride mit den Merkmalen des Anspruchs 1 und hinsichtlich des Abgasrohrsystems mit den Merkmalen des Anspruchs 8 gelöst.

Vorteilhafte Weiterbildungen der Erfindungen sind in den Unteransprüchen angegeben. In den Rahmen der Erfindung fallen sämtliche Kombinationen aus zumindest zwei in der Beschreibung vorkommenden Ansprüchen und/oder in den Figuren offenbarten Merkmalen.

Die Aufgabe wird dementsprechend durch eine Rohrbride zum Umgreifen einer umlaufenden Stoßstelle zwischen zwei axial benachbarten Verbrennungsluftrohren eines Abgassystems einer Heizungsanlage mit einem Anlagering zur Anlage an Mantelflächen, insbesondere äußeren Mantelflächen, beider Verbrennungsluftrohren gelöst, wobei die Rohrbride mit Fixiermitteln um die Verbrennungsluftrohre verspannbar ist und der Anlagering zum Öffnen des Anlagerings zu Montagezwecken einen ersten sowie einen zweiten freien Endbereich aufweist und wobei im montierten Zustand ein endseitiger Überlappungsabschnitt des ersten Endbereichs eine endseitige Zunge des zweiten Endbereichs radial außen in Umfangsrichtung überlappt, wobei der Überlappungsabschnitt im montierten Zustand die Zunge in beide Axialrichtungen übergreift sowie zu beiden Axialseiten der Zunge jeweils eine Anlagefläche aufweist, um sich axial neben der Zunge auf beiden Seiten der Stoßstelle mit jeweils einer Anlagefläche an den äußeren Mantelflächen der Verbrennungsluftrohre abzustützen, wobei erfindungsgemäß die Fixiermittel eine Schnalle und eine Lasche aufweisen, die jeweils einem freien Ende zugeordnet sind, wobei die Schnalle und die Lasche zueinander komplementäre Rastmittel zum Verrasten der Rohrbride, insbesondere zum Verrasten des Anlagerings, in unterschiedlichen Verspannpositionen umfassen.

Der Erfindung liegt somit der Gedanke zugrunde, dass über die Kombination der Schnalle und der Lasche in Verbindung mit den Rastmitteln ein besonders einfacher, ggf. sogar werkzeugfreier Montagevorgang der Rohrbride durchgeführt werden kann und dass zudem durch das Vorsehen mehrerer oder unterschiedlicher Verspannpositionen der Rohrbride oder des Anlagerings der Rohrbride eine optimale Verspannung des Anlagerings an den Verbrennungsluftrohren erzeugt und damit eine optimale Dichtigkeit der Stoßstelle der benachbarten Verbrennungsluftrohre erreicht werden kann. Damit kann besonders vorteilhaft den Ungenauigkeiten oder Toleranzen Rechnung getragen werden, die beispielsweise bei der Herstellung und Montage von entsprechenden Verbrennungsluftrohren entstehen oder vorliegen. Denn durch die verschiedenen Verspannpositionen der Rastmittel von Schnalle und Lasche kann die Spannwirkung auf den Anlagering, welche schließlich die Mfontage und/oder Befestigung der Rohrbride an der Stoßstelle der Verbrennungsluftrohre bewirkt, optimal an die jeweils zwei benachbarten Verbrennungsluftrohre angepasst werden. Dadurch wird ein einfaches Montieren der Rohrbride möglich, bei dem die Gefahr einer Beschädigung der Rohrbride weitestgehend ausgeschlossen ist. Zudem kann die Montage besonders einfach und schnell durchgeführt werden, da hierzu lediglich die Lasche und die Schnalle mit ihren entsprechenden komplementären Rastmittel miteinander in Eingriff gebracht werden müssen, um somit die Verspannung des Anlagerings der Rohrbride und damit die Anlage des Anlagerings an den äußeren Mantelflächen der Verbrennungsluftrohre zu gewährleisten.

Konstruktiv einfach ausgestaltet kann eine Weiterbildung der vorliegenden Erfindung dadurch realisiert werden, dass die Schnalle und/oder die Lasche einstückig mit der Rohrbide ausgebildet und/oder einstückig an der Rohrbride angeformt sind. Dadurch werden gleich mehrere vorteilhafte Wirkungen erzeugt. Einerseits kann dadurch die Rohrbride besonders schnell, einfach und kostengünstig hergestellt werden. Denn beispielsweise im Rahmen eines Kunststoffspritzgussverfahrens kann die gesamte Rohrbride samt Schnalle und/oder Lasche hergestellt werden. Dies führt zudem zu dem besonderen Vorteil, dass für die Montage der Rohrbride keine weiteren, nicht von der Rohrbride selbst umfassten Gegenstände, wie beispielsweise Schrauben oder dergleichen benötigt werden. Zudem wird keine Vormontage oder sonstige vorbereitende Maßnahmen benötigt, um die Montage der Rohrbride an der Stoßstelle der Verbrennungsluftrohre vorzubereiten und/oder durchzuführen. Außerdem werden bei einer einstückigen Ausbildung Schwachstellen oder Ermüdungsstellen unterdrückt, welche sonst am Übergang zwischen der Rohrbride und der Lasche oder der Schnalle entstehen könnten und zu einer ungewollten oder vorzeitigen Ermüdung der Rohrbride führen könnten.

Erfindungsgemäß ist vorgesehen, dass sich die Lasche im Wesentlichen in Umfangsrichtung der Rohrbride erstreckt und mit einem ersten Ende im Bereich eines freien Endes der Rohrbride oder des Anlagerings mit dieser / mit diesem verbunden ist und ein gegenüberliegendes Rastende zum Einführen in die, insbesondere zum Einführen in die und Verrasten mit der Schnalle aufweist, wobei zwischen den beiden Enden der Lasche ein im geöffneten, insbesondere unverspannten Zustand der Rohrbride gekrümmter Deformationsbereich angeordnet ist, der durch eine radiale Krafteinwirkung auf den Deformationsbereich zumindest teilweise unter Verringerung der Krümmung des Deformationsbereichs elastisch radial verformbar ist, sodass bei einer durch eine radiale Krafteinwirkung hervorgerufene Verformung das Rastende von dem mit der Rohrbride verbundenen Ende wegbewegbar ist. Dies bedeutet, dass die Krümmung der Lasche in dem Bereich zwischen den beiden Enden der Lasche eine wesentliche Funktion bei der Erzeugung und Aufrechterhaltung der Verspannung des Anlagerings an den Mantelflächen der Verbrennungsluftrohre zukommen kann. Denn einerseits ist gemäß der vorliegenden Ausführungsform ermöglicht, dass durch eine radiale Krafteinwirkung auf die Krümmung oder den gekrümmten Abschnitt das Rastende von dem fest mit der Rohrbride oder dem Anlagering verbundenen Ende wegbewegt werden kann und damit bei einer entsprechenden räumlichen Fixierung der Lasche auf die Schnalle zu bewegt und bevorzugt in die Schnalle eingeführt, besonders bevorzugt soweit in die Schnalle eingeführt werden kann, sodass die komplementären Rastmittel miteinander verrasten. Gleichzeitig ist der gekrümmte Bereich oder die Krümmung der Lasche zumindest teilweise elastisch ausgestaltet, sodass nach Wegfall einer radial nach innen wirkende, die Krümmung reduzierenden Krafteinwirkung eine Rückstellkraft auftritt oder vielmehr verbleibt, die die Lasche in ihre Ausgangsform und damit auch die Krümmung oder den gekrümmten Bereich zwischen dem Rastende und dem mit dem Anlagering oder der Rohrbride verbundenen Ende in die ursprüngliche Form, also in die ursprüngliche Krümmung zurück überführen will. Für den Fall, dass jedoch die Rastmittel der Lasche und der Schnalle im Rahmen einer Verringerung der Krümmung durch eine radial nach innen gerichtete Krafteinwirkung auf die Lasche, insbesondere die Krümmung der Lasche, bereits erfolgt ist, führt die auf die Lasche oder auf die Krümmung der Lasche wirkende Rückstellkraft auch als Spannkraft auf die freien Endbereiche des Anlagerings der Rohrbride und sorgt damit dafür, dass eine in einer entsprechenden Verspannposition, welche durch die Relativposition der Rastmittel zueinander definiert wird, die Rohrbride mit dem Anlagering an der Mantelfläche, insbesondere an der äußeren Mantelfläche der Verbrennungsluftrohre anliegt und im entsprechenden Zustand verspannt ist, was wiederum die Erzeugung und Aufrechterhaltung der Dichtheit der Rohrbride positiv beeinflusst.

Damit wird ersichtlich, dass durch die vorangehend beschriebene Ausgestaltung der Lasche in besonders bevorzugter Weise eine Montage der Rohrbride vollständig werkzeuglos erfolgen kann, insbesondere dann wenn die Krümmung der Lasche und die dazugehörige Rückstellkraft beim Verformen der Krümmung hin zu einer Verringerung der Krümmung so vorgesehen werden, dass die radial nach innen aufzubringende Kraft, um die Krümmung zeitweise ausreichend stark zu verringern, sodass die Lasche ein die Schnalle eingeführt und dort mit den komplementären Rastmittel miteinander verrasten können, händisch aufgebracht werden kann. Außerdem ist besonders vorteilhaft an der vorangehend beschriebenen Ausgestaltung der Lasche, dass zur Erreichung der Verspannung des Anlagerings an der äußeren Mantelfläche der Verbrennungsluftrohre, insbesondere zur Erreichung einer von verschiedenen möglichen Verspannpositionen keine weiteren, nicht von der Rohrbide umfassten Vorrichtungen, wie beispielsweise Fixiermittel, Schrauben, Klemmen oder dergleichen eingesetzt werden müssen. Auch dadurch wird der Montageaufwand sowie die Vorbereitung der Montage deutlich erleichtert.

In einer weiteren, besonders bevorzugten Ausgestaltung der Rohrbride kann vorgesehen sein, dass die Schnalle einen Bügelabschnitt und einen gegenüber dem Bügelabschnitt gegen eine Rückstellkraft radial, insbesondere radial nach außen, auslenkbaren Rastabschnitt aufweist, wobei die Rastmittel der Schnalle im Rastabschnitt so angeordnet sind, dass sie durch die Rückstellkraft in Richtung ihrer Ausgangsposition kraftbeaufschlagt werden. Dadurch wird ein besonders einfaches Verrasten und auch ein besonders einfaches Erzeugen und Aufrechterhalten einer Verspannung des Anlagerings der Rohrbride, insbesondere des Anlagerings der Rohrbride, an den äußeren Mantelflächen der Verbrennungsluftrohre in einer von verschiedenen mit der Rohrbide realisierbaren Verspannpositionen ermöglicht. Denn dadurch wird erreicht, dass, beispielsweise durch eine entsprechende Positionierung und Dimensionierung der komplementären Rastmittel der Lasche der Bügelabschnitt der Schnalle beim Einführen der Lasche in erster Linie eine Führungswirkung entfaltet und bei einem weiteren Einführen der Lasche in die Schnalle die Rastmittel der Lasche eine radial wirkende Kraft auf die Rastmittel der Schnalle, und damit auch eine radial wirkende Krafteinwirkung auf den mit dem Bügelabschnitt verbundenen Rastabschnitt der Schnalle ausüben, was bei einer entsprechenden Dimensionierung der Vorrichtungsmerkmale und entsprechender Krafteinwirkung dazu führt, dass der Rastabschnitt entgegen einer Rückstellkraft ausgelenkt, die Rastmittel miteinander in Eingriff gebracht und entsprechend eine Verspannposition erreicht werden kann sowie beim Wegfallen der entsprechenden Kräfte, die von der Lasche und/oder den Rastmitteln der Lasche ausgeübt werden, die durch die verbleibende Rückstellkraft des Rastabschnitts des Bügels hervorgerufene Anlage- oder Klemmwirkung ein Aufheben des Eingriffs und damit ein Rückgängigmachen oder Aufheben der Verspannposition der Rastmittel verhindern und dadurch schließlich die Verspannung des Anlagerings der Rohrbride an den äußeren Mantelflächen der Verbrennungsluftrohre sicherstellen und die Dichtheit der Stoßstelle der benachbarten Verbrennungsluftrohre ermöglichen.

Gemäß einer weiteren, besonders vorteilhaften Ausführungsform der Rohrbride ist vorgesehen, dass die Rastmittel als Rastnasen ausgebildet sind. Dadurch kann in vorteilhafter Weise ein Miteinanderverrasten der Rastmittel erreicht werden. Außerdem kann dadurch ein Aufheben der Verrastung der Rastmittel und damit ein Auflösen oder Aufheben einer Verspannposition des Anlagerings der Rohrbride besonders effektiv vorgebeugt werden, wobei dazu bei der Realisierung der Rastmittel in der Form von Rastnasen verhältnismäßig geringe Kräfte aufzubringen sind.

Gemäß einer weiteren, vorteilhaften Ausführungsform der Rohrbide kann vorgesehen sein, dass die Rastmittel der Schnalle oder die Rastmittel der Lasche als zwei in Axialrichtung voneinander beabstandete Reihen von Rastmitteln, insbesondere Rastnasen, ausgebildet sind. Durch das Vorsehen von zwei in Axialrichtung voneinander beabstandeten Reihen von Rastmitteln, zumindest auf der Schnalle oder der Lasche, kann in vorteilhafter Weise ein optimales Verrasten und damit ein optimales Verspannen des Anlagerings an den äußeren Mantelflächen der Verbrennungsluftrohre realisiert werden. Denn durch zwei axial voneinander beabstandete Reihen von Rastmitteln kann in axialer Richtung ein ungleichmäßiges Verspannen und damit eine ungleichmäßige Abdichtung der Rohrbide an den Verbrennungsluftrohren vermieden werden. Mit anderen Worten ausgedrückt bedeutet dies, dass zwei Reihen von Rastmitteln, welche in Axialrichtung voneinander beabstandet sind auch eine Führungs- oder Zentrierwirkung entfalten, die sicherstellt, dass die Rohrbride im Rahmen der Montage gleichmäßig und vor allem in axialer Richtung in gleichem Maße an die äußeren Mantelflächen der Verbrennungsluftrohre angepresst wird.

Eine weitere, besonders bevorzugte Ausgestaltung der Rohrbide kann vorsehen, dass die Rastmittel der Schnalle und/oder der Lasche als zwei in Axialrichtung voneinander beabstandete Einzelrastnasen ausgebildet sind. Dadurch kann, insbesondere wenn die Rastmittel des jeweils anderen Rastpartners als Reihen von Rastmitteln ausgestaltet sind, erreicht werden, dass die Kraft zum Erreichen einer Rastposition der Rastmittel verhältnismäßig gering ausfallen, gleichzeitig jedoch eine sichere Verrastung der Rastmittel sichergestellt wird.

Soweit sowohl die Rastmittel der Lasche als auch die Rastmittel der Schnalle als in Axialrichtung voneinander beabstandete Rastmittel ausgestaltet sind, lässt sich dadurch noch eine weitere vorteilhafte Wirkung erzielen, auf die im Rahmen des erfindungsgemäßen Abgasrohrsystems noch detaillierter eingegangen wird. Eine jeweils gleichmäßig oder in ähnlichem Ausmaß vorgesehene axiale Beabstandung der komplementären Rastmittel, insbesondere Rastnasen, kann nämlich zur besonders einfachen und darüber hinaus zerstörungsfreien Auflösung der Verspannposition der Rastmittel verwendet werden. Denn durch den Abstand zwischen den jeweiligen Rastmitteln kann beispielsweise ein Werkzeug in den Bereich zwischen den Rastmitteln eingebracht, und mit dem Werkzeug beispielsweise der Rastabschnitt des Bügels soweit entgegen der Rückstellkraft ausgelenkt werden, dass die Verrastung der komplementären Rastmittel aufgehoben und der Anlagering der Rohrbide aus einem geschlossenen/verspannten Zustand in einen geöffneten Zustand zurücküberführt werden kann, indem die Verrastposition aufgehoben und die Lasche aus der Schnalle entfernt wird.

Gemäß einer weiteren, vorteilhaften Ausführungsform der Rohrbride kann vorgesehen sein, dass eine Innenoberfläche des Anlagerings in Umfangsrichtung zumindest abschnittsweise eine Nut aufweist, welche zum Umgreifen von an der Stoßstelle der Verbrennungsluftrohre zumindest abschnittsweise ausgebildeten, in Umfangsrichtung verlaufenden Rohrendflansch der Verbrennungsluftrohre dient. Eine derartige Nut oder Innenumfangsnut sorgt, insbesondere zusammen mit den erfindungsgemäßen Fixiermitteln für eine einfache und sichere Montage der Rohrbride. Denn durch das Umgreifen der Rohrendflansche mittels der Nut kann eine sichere und einfache axiale Positionierung der Rohrbride vorgenommen werden. Außerdem ermöglicht das Zusammenwirken der Nut oder Innenumfangsnut mit den entsprechenden Rohrendflanschen der Verbrennungsluftrohre dazu, dass im verspannten Zustand der Rohrbide oder des Anlagerings der Rohrbride eine axiale Sicherung der Rohrbride gegen Verschieben oder Verrutschen gewährleistet wird.

Bezüglich des Abgasrohrsystems wird die o.g. Aufgabe gelöst durch ein Abgasrohrsystem mit mindestens einem Abgasrohr, welches koaxial von mindestens zwei auf Stoß angeordneten Verbrennungsluftrohren umgeben ist, deren umlaufende Stoßstelle von einer Rohrbride nach einem der vorangehenden Ansprüche umgriffen ist, derart, dass die von dem Überlappungsabschnitt radial außen überlappte Zunge auf der Stoßstelle aufliegt und sich der Überlappungsabschnitt zu beiden Axialseiten der Zunge auf den äußeren Mantelflächen der Verbrennungsluftrohre abstützt und erfindungsgemäß dadurch gekennzeichnet ist, dass die Rastmittel der Schnalle und der Lasche der Rohrbride in einer Verrastposition derart miteinander in Eingriff gebracht sind, dass der Anlagering an der äußeren Mantelfläche beider Verbrennungsluftrohre anliegt und um die Verbrennungsluftrohre dichtend verspannt ist. Durch das erfindungsgemäße Abgasrohrsystem für eine Heizungsanlage kann eine einfache sowie eine zuverlässige Montage ermöglicht werden, die sowohl ein besonders hohes Maß an Dichtheit der Stoßstelle der Verbrennungsluftrohre gewährleistet und zudem eine schnelle und sichere Anordnung der Rohrbride an der Stoßstelle zulässt. Durch das Abgasrohrsystem werden durch die Verwendung einer oben beschriebenen, erfindungsgemäßen Rohrbride auch die bzgl. der Rohrbride offenbarten und beschriebenen vorteilhaften Wirkungen erzielt, auf diese bzgl. des Abgasrohrsystems an dieser Stelle verwiesen wird.

Gemäß einer vorteilhaften Ausführungsform des Abgasrohrsystems soll vorgesehen sein, dass die im Eingriff befindlichen Rastmittel der Schnalle und der Lasche eine Aussparung, insbesondere eine in Axialrichtung mittig ausgebildete Aussparung ausbilden, über die ein Werkzeug, insbesondere zum Auslenken eines Rastabschnitts der Schnalle entgegen einer Rückstellkraft des Rastabschnitts, in die Schnalle einführbar ist. Dadurch wird gewährleistet, dass die Rohrbride mit einem Werkzeug, beispielsweise mit einem Schraubendreher oder einem anderen Werkzeug aus ihrer geschlossenen oder verspannten Position wieder geöffnet und dazu der Eingriff der Rastelemente aufgehoben werden kann. Besonders bevorzugt kann die Aussparung durch die oben bereits beschriebenen in Axialrichtung voneinander beabstandeten Rastnasen realisiert werden. Allgemein kann vorteilhaft vorgesehen sein, wenn die Aussparung eine Längsrichtung aufweist, die im Wesentlichen in Umfangsrichtung bzw. tangential zur Umfangsrichtung der Dichtbride verläuft. Durch die Aussparung, insbesondere zum Einführen eines Werkzeugs und Auslenken eines Rastabschnitts der Schnalle gegen eine Rückstellkraft, wird insbesondere das Lösen oder Öffnen der Rohrbride und/oder des Anlagerings der Rohrbride erlaubt, ohne, dass dadurch die Rastmittel selbst verändert oder beschädigt werden. Dies bedeutet auch, dass eine mehrfaches reversibles Öffnen und Schließen der Rohrbride, beispielsweise im Rahmen von Wartungs- oder Instandhaltungsarbeiten an dem Abgasrohrsystem, ermöglicht wird. Damit wird die Langlebigkeit der Rohrbride deutlich erhöht.

Gemäß einer weiteren bevorzugten Ausgestaltung des Abgasrohrsystems kann vorgesehen sein, dass die Stoßstelle zumindest zwei axial aneinander anliegende, in Umfangsrichtung zumindest abschnittsweise verlaufende Rohrendflansche aufweist und dass eine in einer Innenoberfläche des Anlagerings in Umfangrichtung zumindest abschnittsweise ausgebildete Nut der Rohrbride die Rohrendflansche umgreift. Dadurch wird einerseits sichergestellt, dass die Rohrbride schnell und einfach montiert werden kann. Andererseits kann dadurch gewährleistet werden, dass nach der Montage der Rohrbride ein Verschieben in axialer Richtung verhindert werden kann. Dadurch wird die mit der einfachen und sicheren Montage erreichte hohe Dichtheit der Stoßstelle auf Grundlage der Überlappung des Überlappungsabschnitts mit der Zunge ermöglicht und sichergestellt.

Weitere Vorteile, Merkmale und Einzelheiten der Erfindung ergeben sich aus der nachfolgenden Beschreibung der anhand schematischer Zeichnungen erläuterten Ausführungsbeispielen. Darin zeigen:
- Fig. 1a bis Fig. 1c: eine schematische Datellung eines Ausschnitts aus einem erfindungsgemäßen Abgasrohrsystem samt einer erfindungsgemäßen Rohrbride in einem ersten, geöffneten Zustand der Rohrbride;
- Fig. 2a bis Fig. 2c: eine schematische Darstellung eines Ausschnitts aus einem erfindungsgemäßen Abgasrohrsystem samt einer erfindungsgemäßen Rohrbride in einem Zwischenzustand zwischen einem geöffneten und einem verspannten Zustand;
- Fig. 3a, Fig. 3c: eine schematische Ansicht eines erfindungsgemäßen Abgasrohrsystems samt einer erfindungsgemäßen Rohrbride in einem verspannten oder geschlossenen Zustand; und
- Fig. 4a, Fig. 4c: eine schematische Darstellung eines erfindungsgemäßen Abgasrohrsystems samt einer erfindungsgemäßen Rohrbride in einem Zustand zur Überführung aus einem verspannten/geschlossenen Zustand in einen geöffneten Zustand.

Gleiche Elemente bzw. Elemente mit gleicher Funktion sind in den Figuren mit den gleichen Bezugsziffern versehen.

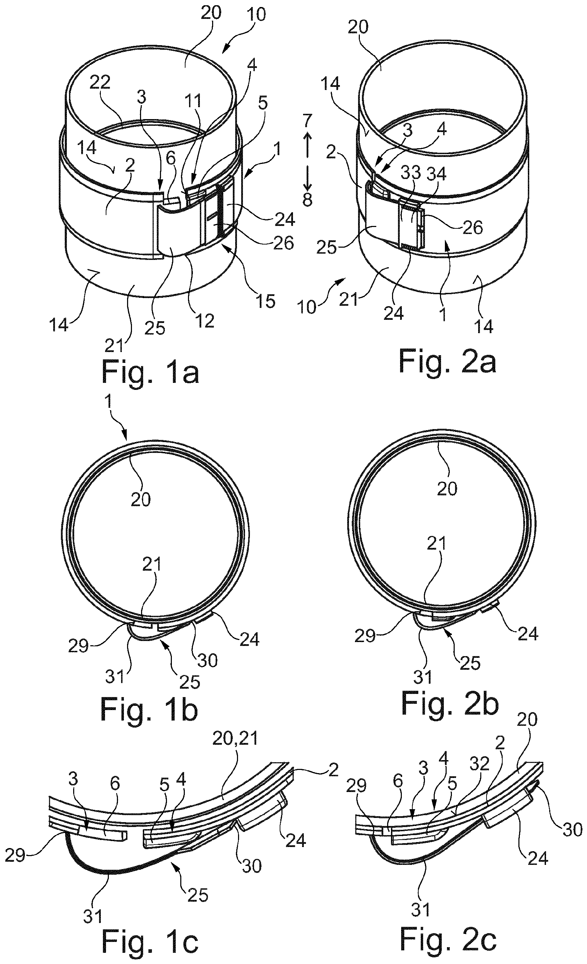

In den Fig. 1 bis 4 zeigen die jeweiligen Figurenteile a, also Fig. 1a, Fig. 2a, Fig. 3a und Fig. 4a perspektivische Ansichten eines Ausschnitts aus einem erfindungsgemäßen Abgasrohrsystem samt einer erfindungsgemäßen Rohrbride. Im Rahmen der Fig. 1 bis 4 werden die einzelnen Schritte beginnend mit einer geöffneten Rohrbride oder einem geöffneten Anlagering einer Rohrbride über eine geschlossene oder an den äußeren Mantelflächen der Verbrennungsluftrohre anliegende Rohrbride bis hin zu einem die abermalige Öffnung der Rohrbride erlaubenden Zustand dargestellt. Die Figurenteile mit der Bezeichnung b zeigen jeweils einen Schnitt durch die Darstellung der Figurenteile a in axialer Richtung auf der Höhe der Rohrbride. Die Figurenteile c zeigen jeweils einen vergrößerten Ausschnitt eines solchen Schnitts in Axialrichtung, indem die Fixiermittel der erfindungsgemäßen Rohrbride detaillierter dargestellt sind.

Fig. 1a zeigt eine Rohrbride 1 eines Abgasrohrsystems 10, wobei die Rohrbride 1 zwei benachbarte Verbrennungsluftrohre 20, 21 des Abgasrohrsystems 10 einer Heizungsanlage im Bereich der Stoßstelle 22 umgreift. Die Rohrbride 1 umfasst einen Anlagering 2, der einen ersten Endbereich 3 sowie einen zweiten Endbereich 4 aufweist. Im ersten Endbereich 3 ist eine Zunge 6 angeordnet. Im zweiten Endbereich 4 ist ein Überlappungsabschnitt 5 angeordnet, wobei im montierten Zustand die endseitige Zunge 6 radial außen vom endseitigen Überlappungsabschnitt 5 in Umfangsrichtung überlappt wird, wobei der Überlappungsabschnitt 5 im montierten Zustand die Zunge 6 in beide Axialrichtungen 7, 8 übergreift, sowie zu beiden Axialseiten der Zunge 6 jeweils eine Anlagefläche 11, 12 aufweist, um sich axial neben der Zunge 6 auf beiden Seiten der Stoßstelle 22 mit jeweils einer Anlagefläche 11, 12 an den äußeren Mantelflächen 14 der Verbrennungsluftrohre 20, 21 abzustützen. Bzgl. der Einzelheiten der Zunge 6 und des Überlappungsabschnitts 5 und den daraus resultierenden Vorteilen nach Art einer Labyrinth-Dichtung wird auf die DE 10 2013 111 653 A1 verwiesen, deren Inhalt vollumfänglich in die vorliegende Offenbarung mit aufgenommen wird. Die Rohrbride 1 umfasst zudem Fixiermittel 15, welche gemäß der vorliegenden Erfindung als eine dem ersten Endbereich 3 des Anlagerings 2 zugeordnete Lasche 25 sowie eine dem zweiten Endbereich 4 des Anlagerings 2 zugeordnete Schnalle 24 ausgebildet sind. Die Fixiermittel 15, also die Schnalle 24 und die Lasche 25 weisen dabei zueinander komplementäre Rastmittel 26 auf, von denen in der Darstellung der Fig. 1 lediglich die Rastmittel 26 der Lasche 25 zu erkennen sind. Wie bereits angedeutet, betrifft die Darstellung der Fig. 1a sowie die Darstellung der Fig. 1b und Fig. 1c die Rohrbride 1 und deren Anlagering 2 in einem geöffneten Zustand, wie er beispielsweise in der Fig. 1a dadurch gezeigt ist, dass die Zunge 6 und der Überlappungsabschnitt 5 noch voneinander beabstandet und nicht in einer sich überlappenden Anordnung befinden.

Gleiches ist auch aus der Schnittdarstellung der Fig. 1b zu erkennen. Hierin ist neben dem Anlagering 2 der Rohrbride 1 und den Verbrennungsluftrohren 20, 21 auch die Ausgestaltung der Lasche 25 in einer Ausgangsposition oder in einer kraftlosen Position dargestellt. Neben einem ersten Ende 29, mit dem die Lasche 25 im ersten Endbereich 3 mit dem Anlagering 2 verbunden ist, umfasst die Lasche 25, welche sich im Wesentlichen in Umfangsrichtung erstreckt, ein dem ersten Ende 29 gegenüberliegendes Rastende 30, welches zum Einführen, bevorzugt zum Einführen in die und/oder Verrasten mit der Schnalle 24 vorgesehen ist. Zwischen dem ersten Ende 29 und dem zweiten Ende, insbesondere dem Rastende 30, der Schnalle 25 befindet sich ein Deformationsbereich 31, der durch eine radiale Krafteinwirkung nach innen oder nach radial innen zumindest teilweise unter Verringerung der Krümmung des Deformationsbereichs 31 elastisch radial verformbar ist, sodass bei der Verformung das Rastende 30 von dem mit der Rohrbride 1 verbunden Ende 29 wegbewegbar ist. Auf die Verformung des Deformationsbereichs 31 und die entsprechende Änderung der Krümmung des Deformationsbereichs 31 sowie die daraus resultierende Bewegung des Rastendes 30 wird insbesondere im Rahmen der Fig. 2 bis 4 noch genauer eingegangen werden.

Die Fig. 1c zeigt einen vergrößerten Ausschnitt der Fig. 1b im Bereich der freien Endbereiche 3, 4 des Anlagerings 2, insbesondere zur besseren Veranschaulichung der Lasche 25 mit ihrem ersten Ende 29, dem Rastende 30 und dem Deformationsbereich 31.

Die Fig. 2a zeigt einen Ausschnitt aus einem Abgasrohrsystem 10, welcher mit einer Rohrbride 1, die vorrichtungsseitig im Wesentlichen dem Abgasrohrsystem 10 und der Rohrbide 1 der Fig. 1a entsprechen. Lediglich der Zustand der Rohrbride 1 ist gegenüber der Darstellung der Fig. 1a verändert. Denn die Lasche 25 ist in der Darstellung der Fig. 2a bereits in die Schnalle 24 eingeführt, sodass die freien Endbereich 3, 4 des Anlagerings 2 aufeinander zu bewegt wurden, ohne dass jedoch bereits eine Anlage, insbesondere eine dichtende Anlage der Innenoberfläche 32 der Rohrbride 1 an den äußeren Mantelflächen 14 der Verbrennungsluftrohre 20, 21 erreicht wurde. Im Beispiel der Fig. 2a ist dazu ein Eingriff der Rastmittel 26 der Lasche 25 mit den Rastmitteln 26 der Schnalle hergestellt worden. In der Darstellung der Fig. 2a ist auch erkennbar, dass die Schnalle 24 einen der Lasche 25 zugewandten Bügelabschnitt 33 und einen der Lasche in Umfangsrichtung abgewandten Rastabschnitt 34 umfasst, wobei der Rastabschnitt 34 die in der Fig. 2a nicht dargestellten Rastmittel 26 der Schnalle 24 aufweist und gegen eine Rückstellkraft radial gegenüber dem Bügelabschnitt 33 auslenkbar ist.

Die Fig. 2b entspricht in den dargestellten Vorrichtungen, nämlich dem Abgasrohrsystem 10 und der Rohrbide 1, weitestgehend der Darstellung der Fig. 2a. Dementsprechend sind gleiche Vorrichtungsmerkmale mit gleichen Bezugszeichen versehen. Der Öffnungs- oder Verschlusszustand der Rohrbride 1 in der Darstellung der Fig. 2b entspricht der Darstellung der Fig. 2a und unterscheidet sich damit von der Darstellung und dem Zustand der Fig. 1b. Wie auch in der Fig. 2b, insbesondere aber in der Fig. 2c erkenntlich ist, ist das Rastende 30 der Lasche 25 bereits in die Schnalle 24 eingeführt, was dadurch erreicht wird oder erreicht wurde, dass die freien Endbereiche 3, 4 des Anlagerings 2 der Rohrbride 1 aufeinander zu bewegt wurden und die Zunge 6 zumindest teilweise bereits von dem Überlappungsabschnitt 5 überlappt wird.

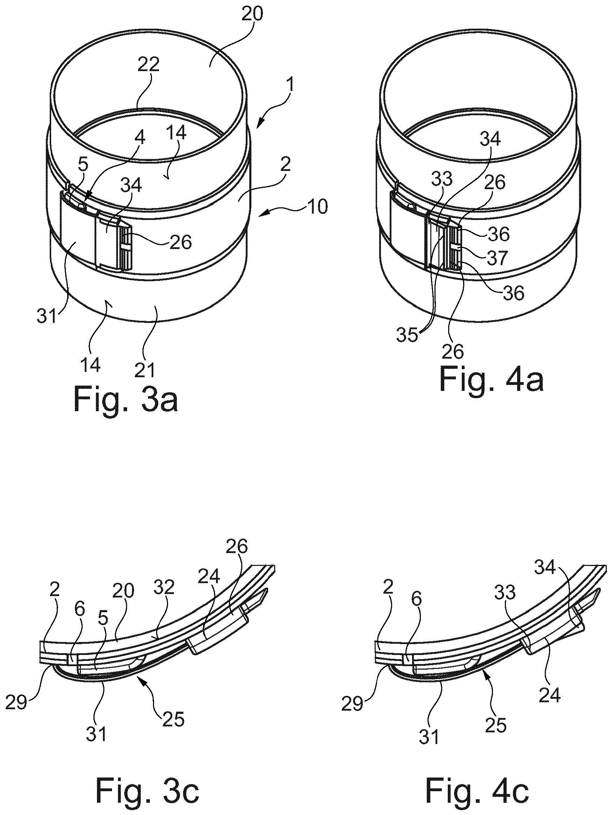

Was sich jedoch bezüglich der Lasche 25 im Vergleich zu der Darstellung der Fig. 1b und 1c nicht oder nur unwesentlich geändert hat, ist die Krümmung der Lasche 25 im Deformationsbereich 31 im Zustand der Fig. 2a bis 2c, was im Vergleich der Fig. 1c und 2c auch erkenntlich wird. Im Zustand der Fig. 2 kann bereits eine Anlage der Innenoberfläche 32 des Anlagerings 2 an den äußeren Mantelflächen 14 der Verbrennungsluftrohre 20, 21 bewirkt worden sein, ohne dass jedoch eine die Dichtung und Befestigung der Rohrbride 1 bewirkende Verspannung des Anlagerings 2 an den Verbrennungsluftrohren 21, 22 hervorgerufen wurde. Diese Verspannung wird durch eine Beeinflussung der Lasche 25, insbesondere des Deformationsbereichs 31 der Lasche 25 bewerkstelligt, die den Übergang zwischen den Fig. 2a bis 2c hin zu den Fig. 3a, 3c bewirkt. Die Fig. 3a entspricht auf der gegenständlichen Ebene ebenfalls im Wesentlichen den Fig. 1a und 2a, weshalb auch in der Fig. 3a entsprechende Vorrichtungsmerkmale mit entsprechenden Bezugszeichen versehen sind.

Im Vergleich zur Darstellung der Fig. 2a und 2c fällt bei der Betrachtung der Fig. 3a und 3c deutlich auf, dass einerseits die Krümmung des Deformationsbereichs 31 der Lasche 25 deutlich verringert ist und der Deformationsbereich 31 der Lasche 25 sogar fast auf dem Überlappungsabschnitt 5 des zweiten freien Endbereichs 4 des Anlagerings 2 zur Anlage kommt. Dadurch wurde, da das ersten Ende 29 der Lasche 25 fest mit dem Anlagering 2 der Rohrbride 1 verbunden ist, das Rastende 30 der Lasche 25 vom ersten Ende 29 wegbewegt, wobei die Bewegung zumindest auch oder zumindest teilweise durch die Schnalle 26 geführt wurde. Dies bedeutet aber auch, dass die Rastmittel 26 in eine gegenüber der Darstellung der Fig. 2 veränderte relative Position zueinander überführt wurden. Diese Veränderung hinsichtlich der Rastmittel 26 sowie hinsichtlich der Lasche 25 wurde beispielsweise durch eine radiale Krafteinwirkung auf den Deformationsbereich 31 erreicht. Sobald diese radiale Krafteinwirkung entfällt, entsteht eine Rückstellkraft, welche die ursprüngliche Krümmung des Deformationsbereichs 31, wie sie beispielsweise in der Fig. 1c gezeigt ist, wiederherstellen will und dadurch zu einer Spannwirkung zwischen der Lasche 25 und der Schnalle 26 führt. Dadurch wird der Anlagering 2 der Rohrbride 1 an den äußeren Mantelflächen 14 der Verbrennungsluftrohre 20, 21 verspannt. Dadurch tritt auch die Dichtwirkung der Rohrbride 1 gegenüber der Stoßstelle 22 ein.

Die Einführung des Rastendes 30 in die Schnalle 24, wie sie in der Fig. 2 gezeigt ist und die entsprechend weitergehende Einführung des Rastendes 30 der Lasche 25 in die Schnalle 26, wie sie in der Fig. 3 dargestellt ist, kann beispielsweise dadurch erfolgen, dass die Rastmittel 26 eine, beispielsweise radial nach außen gerichtete Kraft auf den Rastabschnitt 34 der Schnalle 26 ausüben und damit entgegen einer Rückstellkraft den Rastabschnitt radial nach außen auslenken, wobei nach dem Erreichen einer Verrastposition der Rastmittel 26 die besagte Rückstellkraft auf den Rastabschnitt 34 der Schnalle 24 dafür sorgt, dass die Rastmittel 26 der Schnalle 24 in Richtung ihrer Ausgangsposition kraftbeaufschlagt werden und damit die Sicherung der Relativposition der Rastmittel 26 zueinander und damit ggf. auch die Verspannposition der Rohrbride 1 sicherstellen.

Die Fig. 3a und 3c zeigen also die Rohrbride 1 in einem Zustand, indem der Anlagering 2 mit seiner Innenoberfläche 32 an den äußeren Mantelflächen 14 der Verbrennungsluftrohre 20, 21 zur Anlage kommt und um die Verbrennungsluftrohre 20, 21 verspannt ist.

Eine besonders vorteilhafte Ausgestaltung der Rohrbride 1 und des Abgasrohrsystems 10 zur Aufhebung dieses verspannten oder geschlossenen Zustandes des Anlagerings 2 oder der Rohrbride 1 ist beispielhaft in den Fig. 4a und 4c dargestellt.

Wie bereits in den Fig. 2 und 3 erkennbar, sind die Rastmittel 26 der Lasche 25 als zwei in Axialrichtung 7, 8 voneinander beabstandete Reihen 35 von Rastmitteln 26, insbesondere Rastnasen 36 ausgebildet. Gleichermaßen kann vorgesehen sein, dass die in den Fig. 1 bis 4 nicht dargestellten Rastmittel 26 der Schnalle 24, welche auf der radial innenliegenden Seite des Rastabschnitts 34 angeordnet sind, als zwei in Axialrichtung 7, 8 voneinander beabstandete Einzelrastmittel, insbesondere Einzelrastnasen ausgebildet sind. In den Zustand der Fig. 3a, 3c bilden die Rastmittel 26 der Schnalle 24 und der Lasche zusammen damit eine im Wesentlichen in Umfangsrichtung oder tangential zur Umfangsrichtung verlaufende Aussparung 37 aus, über die ein in der Fig. 3 nicht dargestelltes Werkzeug, beispielsweise ein Schraubendreher oder Ähnliches, insbesondere zum Auslenken des Rastabschnitts 34 der Schnalle 24 entgegen der Rückstellkraft, in die Schnalle 24 einführbar ist, um die Verrastung oder das Verrasten der Rastmittel 26 aufzuheben.

Auch wenn die Fig. 4 keine Darstellung des entsprechenden Werkzeugs umfasst, so ist in der Fig. 4 doch die Auslenkung des Rastabschnitts 34 der Schnalle 24 dargestellt. Dadurch, dass die Rastmittel 26 durch ihre in Axialrichtung voneinander beabstandete Anordnung die Aussparung 37 realisieren, kann ein entsprechendes Werkzeug in die Schnalle 24 eingeführt und der Rastabschnitt 34 entgegen der Rückstellkraft ausgelenkt werden, ohne dass dadurch die Rastmittel 26 beschädigt werden, oder dass dadurch das Öffnen der Rohrbride 1, insbesondere des Anlagerings 2 durch das Werkzeug behindert oder beeinträchtigt wird. Die Rückstellkraft des Rastabschnitts kann beispielsweise über den

Übergangsbereich zwischen dem Bügelabschnitt 33 und dem Rastabschnitt 34 hervorgerufen werden. Im Beispiel der im Rahmen der Fig. 1 bis 4 beschriebenen Ausführungsform der Rohrbride 1 kann beispielsweise vorgesehen sein, dass die Schnalle 24 einstückig und damit auch der Übergangsbereich zwischen dem Bügelabschnitt und dem Rastabschnitt einstückig ausgebildet ist und die Rückstellkraft auf den Rastabschnitt somit im weitesten Sinne über die Länge und die Stärke des Übergangsabschnitts bestimmt wird. Gleichermaßen sind selbstredend die Materialeigenschaften der Rohrbride 1 und damit auch die Materialeigenschaften der Schnalle 24, insbesondere im Bereich des Übergangsabschnitts für die radial wirkende Rückstellkraft auf den Rückstellabschnitt und die dort angeordneten oder befindlichen Rastmittel 26 der Schnalle 24 mitentscheidend.

### Bezugszeichenliste

- 1: Rohrbride
- 2: Anlagering
- 3: erster Endbereich
- 4: zweiter Endbereich
- 5: Überlappungsanschnitt
- 6: Zunge
- 7, 8: Axialrichtungen
- 10: Abgasrohrsystem
- 11, 12: Anlagefläche
- 14: Mantelfläche
- 15: Fixiermittel
- 20,21: Verbrennungsluftrohre
- 22: Stoßstelle
- 24: Schnalle
- 25: Lasche
- 26: Rastmittel
- 29: freies Ende
- 30: Rastende
- 31: Deformationsbereich
- 32: Innenoberfläche
- 33: Bügelabschnitt
- 34: Rastabschnitt
- 36: Rastnasen
- 37: Aussparung

## Patentansprüche

1. Rohrbride zum Umgreifen einer umlaufenden Stoßstelle (22) zwischen zwei axial benachbarten Verbrennungsluftrohren (20, 21) eines Abgasrohrsystems (10) einer Heizungsanlage mit einem Anlagering (2) zur Anlage an Mantelflächen (14) beider Verbrennungsluftrohre, und mit Fixiermitteln (15) , mittels welcher der Anlagering (2) um die Verbrennungsluftrohre (20, 21) verspannbar ist,
wobei der Anlagering (2) zum Öffnen des Anlagerings (2) zu Montagezwecken einen ersten sowie einen zweiten freien Endbereich (3, 4) aufweist, und wobei im montierten Zustand ein endseitiger Überlappungsabschnitt (5) des ersten Endbereichs (3) eine endseitige Zunge (6) des zweiten Endbereichs (4) radial außen in Umfangsrichtung überlappt
wobei der Überlappungsabschnitt (5) im montierten Zustand die Zunge (6) in beide Axialrichtungen (7, 8) übergreift sowie zu beiden Axialseiten der Zunge (6) jeweils eine Anlagefläche (11, 12) aufweist, um sich axial neben der Zunge (6) auf beiden Seiten der Stoßstelle (22) mit jeweils einer Anlagefläche (11, 12) an den äußeren Mantelflächen (14) der Verbrennungsluftrohre (20, 21) abzustützen,
**dadurch gekennzeichnet, dass**
die Fixiermittel (15) eine Schnalle (24) und eine Lasche (25) aufweisen, die jeweils einem freien Ende (29) zugeordnet sind, wobei die Schnalle (24) und die Lasche (25) zueinander komplementäre Rastmittel (26) zum Verrasten der Rohrbride (1) in unterschiedlichen Verspannpositionen umfassen und,
dass sich die Lasche (25) im Wesentlichen in Umfangsrichtung erstreckt und mit einem ersten Ende (29) im Bereich eines freien Endbereichs (3) der Rohrbride (1) mit dieser verbunden ist und ein gegenüberliegendes Rastende (30) zum Einführen in die Schnalle (24) aufweist, wobei zwischen den beiden Enden (29, 30) ein im geöffneten Zustand der Rohrbride (1) gekrümmter Deformationsbereich (31) angeordnet ist, der durch eine radiale Krafteinwirkung zumindest teilweise unter Verringerung der Krümmung elastisch radial verformbar ist, sodass bei der Verformung das Rastende (30) von dem mit der Rohrbride (1) verbundenen Ende (29) weg bewegbar ist..

2. Rohrbride nach Anspruch 1,
**dadurch gekennzeichnet,**
**dass** die Schnalle (24) und/oder die Lasche (25) einstückig mit der Rohrbride (1) ausgebildet sind.

3. Rohrbride nach einem der Ansprüche 1 oder 2,
**dadurch gekennzeichnet, dass**
die Schnalle (24) einen Bügelabschnitt (33) und einen gegenüber dem Bügelabschnitt (33) gegen eine Rückstellkraft radial, insbesondere nach außen, auslenkbaren Rastabschnitt (34) aufweist, wobei die Rastmittel (26) der Schnalle (24) im des Rastabschnitts (34) so angeordnet sind, dass sie durch die Rückstellkraft in Richtung ihrer Ausgangsposition kraftbeaufschlagt werden.

4. Rohrbride nach einem der Ansprüche 1 bis 3,
**dadurch gekennzeichnet,**
**dass** die Rastmittel (26) als Rastnasen ausgebildet sind.

5. Rohrbride nach einem der Ansprüche 1 bis 4,
**dadurch gekennzeichnet,**
**dass** die Rastmittel (26) der Schnalle (24) oder der Lasche (25) als zwei in Axialrichtung (7, 8) voneinander beabstandete Reihen von Rastnasen ausgebildet sind.

6. Rohrbride nach einem der Ansprüche 1 bis 5,
**dadurch gekennzeichnet,**
**dass** die Rastmittel (26) der Schnalle (24) oder der Lasche (25) als zwei in Axialrichtung (7, 8) voneinander beabstandete Einzelrastmittel, insbesondere Einzelrastnasen ausgebildet sind.

7. Rohrbride nach einem der Ansprüche 1 bis 6,
**dadurch gekennzeichnet,**
**dass** eine Innenoberfläche (32) des Anlagerings (2) in Umfangsrichtung zumindest abschnittsweise eine Nut aufweist, welche zum Umgreifen von an der Stoßstelle (22) der Verbrennungsluftrohre (20, 21) zumindest abschnittsweise ausgebildeten in Umfangsrichtung verlaufenden Rohrendflanschen dient.

8. Abgasrohrsystem mit mindestens einem Abgasrohr, welches koaxial von mindestens zwei auf Stoß angeordneten Verbrennungsluftrohren (20, 21) umgeben ist, deren umlaufende Stoßstelle (22) von einer Rohrbride (1) nach einem der vorhergehenden Ansprüche umgriffen ist, derart dass
die von dem Überlappungsabschnitt (5) radial außen überlappte Zunge (6) auf der Stoßstelle (22) auflegt und sich der Überlappungsabschnitt (5)
zu beiden Axialseiten der Zunge (6) auf den Mantelflächen (14) der Verbrennungsluftrohre (20, 21) abstützt
**dadurch gekennzeichnet,**
**dass** die Rastmittel (26) der Schnalle (24) und der Lasche (25) in einer Verrastposition derart miteinander in Eingriff gebracht sind,
**dass** der Anlagering (2) an Mantelflächen (14) beider Verbrennungsluftrohre (20, 21) anliegt und um die Verbrennungsluftrohre (20, 21) dichtend verspannt ist.

9. Abgasrohrsystem nach Anspruch 8,
**dadurch gekennzeichnet**,
die im Eingriff befindlichen Rastmittel (26) eine Aussparung (37) ausbilden, über die ein Werkzeug, insbesondere zum Auslenken eines Rastabschnitts (34) der Schnalle (24) entgegen einer Rückstellkraft, in die Schnalle (24) einführbar ist.

10. Abgasrohrsystem nach Anspruch 8 oder 9,
**dadurch gekennzeichnet,**
**dass** die Stoßstelle (22) zumindest zwei axial aneinander anliegende, in Umfangsrichtung zumindest abschnittsweise verlaufende Rohrendflansche aufweist und dass eine in der Innenoberfläche (32) des Anlagerings (2) in Umfangsrichtung zumindest abschnittsweise ausgebildete Nut der Rohrbride (1) die Rohrendflansche umgreift.

## Claims

1. A pipe clamp for engaging around a circumferential joint (22) between two axially adjacent combustion air pipes (20, 21) of an exhaust pipe system (10) of a heating system, the pipe clamp having a contact ring (2) for contacting circumferential surfaces (14) of the two combustion air pipes and fixation means (15) by means of which the contact ring (2) can be braced around the combustion air pipes (20, 21),
the contact ring (2) having a first and a second free end portion (3, 4) for opening the contact ring (2) for installation purposes, and an overlap section (5) at the end of the first end portion (3) overlapping a tongue (6) at the end of the second end portion (4) on the radial outside in the circumferential direction in the installed state,
the overlap section (5) overlapping the tongue (6) in both axial directions (7, 8) in the installed state and having a contact surface (11, 12) on each of the two axial sides of the tongue (6) in order to be supported on the outer circumferential surfaces (14) of the combustion air pipes (20, 21) axially adjacent to the tongue (6) on both sides of the joint (22) by means of a respective contact surface (11, 12)
**characterized in that**
the fixation means (15) have a buckle (24) and a loop (25), each of which is assigned to a free end (29), the buckle (24) and the loop (25) comprising complementary locking means (26) for locking the pipe clamp (1) in different bracing positions,
and that the loop (25) extends substantially in the circumferential direction and that a first end (29) of the loop (25) is connected to the pipe clamp (1) in the area of a free end portion (3) of the pipe clamp (1) and that the loop (25) has an opposite locking end (30) for being inserted into the buckle (24), wherein a deformation area (31), which is curved in the open state of the pipe clamp (1), is disposed between the two ends (29, 30), wherein the deformation area (31) is elastically and radially deformable by applying a radial force, its curvature being at least partially reduced in the process, the locking end (30) thus being movable away from the end (29) which is connected to the pipe clamp (1) when the deformation area (31) is deformed.

2. The pipe clamp according to claim 1,
**characterized in that**
the buckle (24) and/or the loop (25) are realized in one piece with the pipe clamp (1).

3. The pipe clamp according to claim 1 or 2,
**characterized in that**
the buckle (24) has a bracket section (33) and a locking section (34) which can be deflected in the radial direction, in particular outwards, in relation to the bracket section (33) against a restoring force, the locking means (26) of the buckle (24) being disposed in the locking section (34) in such a manner that a force is applied to the locking means (26) in the direction of their starting position by the restoring force.

4. The pipe clamp according to any one of claims 1 to 3,
**characterized in that**
the locking means (26) are realized as locking lugs.

5. The pipe clamp according to any one of claims 1 to 4,
**characterized in that**
the locking means (26) of the buckle (24) or of the loop (25) are realized as two rows of locking lugs, the rows being spaced apart from one another in the axial direction (7, 8).

6. The pipe clamp according to any one of claims 1 to 5,
**characterized in that**
the locking means (26) of the buckle (24) or of the loop (25) are realized as two individual locking means, in particular individual locking lugs, which are spaced apart from one another in the axial direction (7, 8).

7. The pipe clamp according to any one of claims 1 to 6,
**characterized in that**
at least part of an inner surface (32) of the contact ring (2) has a groove in the circumferential direction, the groove serving to engage around pipe end flanges which are formed at least at part of the joint (22) of the combustion air pipes (20, 21) and which extend in the circumferential direction.

8. An exhaust pipe system comprising at least one exhaust pipe which is coaxially surrounded by at least two butted combustion air pipes (20, 21) whose circumferential joint (22) is surrounded by a pipe clamp (1) according to any one of the preceding claims in such a manner that
the tongue (6) which is overlapped by the overlap section (5) on the radial outside rests on the joint (22) and that the overlap section (5) is supported by the circumferential surfaces (14) of the combustion air pipes (20, 21) on both axial sides of the tongue (6),
**characterized in that**,
in a locking position, the locking means (26) of the buckle (24) and of the loop (25) are engaged with one another in such a manner that the contact ring (2) contacts circumferential surfaces (14) of the two combustion air pipes (20, 21) and is braced around the combustion air pipes (20, 21) in a sealing manner.

9. The exhaust pipe system according to claim 8,
**characterized in that**
the locking means (26) which engage with one another form a recess (37) via which a tool, in particular for deflecting a locking section (34) of the buckle (24) against a restoring force, can be inserted into the buckle (24).

10. The exhaust pipe system according to claim 8 or 9,
**characterized in that**
the joint (22) has at least two pipe end flanges which contact one another axially and which at least partially extend in the circumferential direction and that a groove of the pipe clamp (1) which is formed in at least part of the inner surface (32) of the contact ring (2) in the circumferential direction engages around the pipe end flanges.

## Revendications

1. Collier de tuyau destiné à s'engager autour d'un joint (22) circonférentiel entre deux tuyaux d'air de combustion (20, 21) axialement adjacents d'un système de tuyau d'échappement (10) d'une installation de chauffage, le collier de tuyau comprenant un anneau de contact (2) destiné à contacter des surfaces d'enveloppe (14) des deux tuyaux d'air de combustion et comprenant des moyens de fixation (15) au moyen desquels l'anneau de contact (2) peut être serré autour des tuyaux d'air de combustion (20, 21), l'anneau de contact (2) ayant une première et une deuxième partie d'extrémité (3, 4) libre pour ouvrir l'anneau de contact (2) à des fins de montage, une partie de chevauchement (5) d'extrémité de la première partie d'extrémité (3) chevauchant une languette (6) d'extrémité de la deuxième partie d'extrémité (4) à l'extérieur radial dans la direction circonférentielle dans l'état monté,
la partie de chevauchement (5) s'engageant sur la languette (6) dans les deux directions axiales (7, 8) dans l'état monté et ayant une surface de contact (11, 12) respective des deux côtés axiaux de la languette (6) afin de s'appuyer sur les surfaces d'enveloppe (14) extérieures des tuyaux d'air de combustion (20, 21) axialement à côté de la languette (6) des deux côtés du joint (22) par une surface de contact (11, 12) respective,
**caractérisé en ce que**
les moyens de fixation (15) ont une boucle (24) et une patte (25), chacune assignée à une extrémité (29) libre, la boucle (24) et la patte (25) comprenant des moyens de verrouillage (26) complémentaires pour verrouiller le collier de tuyau (1) dans différentes positions de serrage,
et que la patte (25) s'étend essentiellement dans la direction circonférentielle et est reliée au collier de tuyau (1) par une première extrémité (29) dans la zone d'une partie d'extrémité (3) libre du collier de tuyau (1) et a une extrémité de verrouillage (30) opposée pour être insérée dans la boucle (24), une partie de déformation (31) incurvée dans l'état ouvert du collier de tuyau (1) étant disposée entre les deux extrémités (29, 30), la partie de déformation (31) pouvant être déformée de manière élastique et radiale par une application de force radiale, au moins partiellement tout en réduisant la courbure, de sorte que, lors de la déformation, l'extrémité de verrouillage (30) peut être écartée de l'extrémité (29) qui est reliée au collier de tuyau (1).

2. Collier de tuyau selon la revendication 1,
**caractérisé en ce que**
la boucle (24) et/ou la patte (25) sont réalisées en une pièce avec le collier de tuyau (1).

3. Collier de tuyau selon la revendication 1 ou la revendication 2,
**caractérisé en ce que**
la boucle (24) a une partie d'étrier (33) et une partie de verrouillage (34) qui peut être déviée radialement, notamment vers l'extérieur, par rapport à la partie d'étrier (33) contre une force de rappel, les moyens de verrouillage (26) de la boucle (24) étant disposés dans la partie de verrouillage (34) de telle manière qu'une force est appliquée aux moyens de verrouillage (26) dans la direction de leur position de départ par la force de rappel.

4. Collier de tuyau selon l'une quelconque des revendications 1 à 3,
**caractérisé en ce que**
les moyens de verrouillage (26) sont réalisés comme ergots de verrouillage.

5. Collier de tuyau selon l'une quelconque des revendications 1 à 4,
**caractérisé en ce que**
les moyens de verrouillage (26) de la boucle (24) ou de la patte (25) sont réalisés comme deux rangées d'ergots de verrouillage espacées l'une de l'autre dans la direction axiale (7, 8).

6. Collier de tuyau selon l'une quelconque des revendications 1 à 5,
**caractérisé en ce que**
les moyens de verrouillage (26) de la boucle (24) ou de la patte (25) sont réalisés comme deux moyens de verrouillage individuels, notamment comme ergots de verrouillage individuels, espacés l'un de l'autre dans la direction axiale (7, 8).

7. Collier de tuyau selon l'une quelconque des revendications 1 à 6,
**caractérisé en ce**
**qu'**une surface intérieure (32) de l'anneau de contact (2) a, au moins dans des sections, une rainure dans la direction circonférentielle, laquelle rainure servant à s'engager autour de brides d'extrémité de tuyau qui sont, au moins dans des sections, réalisées au joint (22) des tuyaux d'air de combustion (20, 21) et qui s'étendent dans la direction circonférentielle.

8. Système de tuyau d'échappement comprenant au moins un tuyau d'échappement qui est entouré coaxialement par au moins deux tuyaux d'air de combustion (20, 21) qui sont disposés bord à bord et dont le joint (22) circonférentiel est entouré par un collier de tuyau (1) selon l'une quelconque des revendications précédentes de telle manière que
la languette (6) qui est chevauchée par la partie de chevauchement (5) à l'extérieur radial repose sur le joint (22) et que la partie de chevauchement (5) s'appuie sur les surfaces d'enveloppe (14) des tuyaux d'air de combustion (20, 21) des deux côtés axiaux de la languette (6),
**caractérisé en ce que**
les moyens de verrouillage (26) de la boucle (24) et de la patte (25) s'engagent l'un avec l'autre dans une position de verrouillage de telle manière que l'anneau de contact (2) contacte des surfaces d'enveloppe (14) des deux tuyaux d'air de combustion (20, 21) et est serré autour des tuyaux d'air de combustion (20, 21) de manière étanche.

9. Système de tuyau d'échappement selon la revendication 8,
**caractérisé en ce que**
les moyens de verrouillage (26) qui s'engagent l'un avec l'autre forment un renfoncement (37) par lequel un outil, notamment pour dévier une partie de verrouillage (34) de la boucle (24) contre une force de rappel, peut être inséré dans la boucle (24).

10. Système de tuyau d'échappement selon la revendication 8 ou la revendication 9,
**caractérisé en ce que**
le joint (22) a au moins deux brides d'extrémité de tuyau qui se contactent axialement et qui s'étendent, au moins partiellement, dans la direction circonférentielle, et qu'une rainure du collier de tuyau (1) qui est, au moins partiellement, formée dans la direction circonférentielle dans la surface intérieure (32) de l'anneau de contact (2) s'engage autour des brides d'extrémité de tuyau.
